(19) 

**Europäisches Patentamt**
**European Patent Office**
**Office européen des brevets**

(11) **EP 4 418 355 A1**

(12) **EUROPEAN PATENT APPLICATION**
published in accordance with Art. 153(4) EPC

(43) Date of publication:
**21.08.2024 Bulletin 2024/34**

(21) Application number: **22880955.4**

(22) Date of filing: **07.10.2022**

(51) International Patent Classification (IPC):
*H01M 4/24* (2006.01)  *H01M 4/42* (2006.01)
*H01M 4/66* (2006.01)  *H01M 10/28* (2006.01)
*H01M 50/474* (2021.01)  *H01M 50/477* (2021.01)
*H01M 50/48* (2021.01)

(52) Cooperative Patent Classification (CPC):
**H01M 4/24; H01M 4/42; H01M 4/66; H01M 10/28;**
**H01M 50/474; H01M 50/477; H01M 50/48;**
Y02E 60/10

(86) International application number:
**PCT/JP2022/037651**

(87) International publication number:
**WO 2023/063260 (20.04.2023 Gazette 2023/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2021  JP 2021167170**

(71) Applicants:
• **The Doshisha**
**Kyoto 602-8580 (JP)**
• **Mitsui Mining & Smelting Co., Ltd.**
**Shinagawa-ku**
**Tokyo 141-8584 (JP)**

(72) Inventors:
• **MORIMITSU, Masatsugu**
**Kyotanabe-shi, Kyoto 610-0394 (JP)**
• **SAWAMOTO, Hiroki**
**Takehara-shi, Hiroshima 725-0025 (JP)**
• **KURUMA, Takuya**
**Takehara-shi, Hiroshima 725-0025 (JP)**
• **YAMAGUCHI, Kyohei**
**Takehara-shi, Hiroshima 725-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **ANODE STRUCTURE FOR SECONDARY BATTERY AND SECONDARY BATTERY PROVIDED WITH SAME**

(57) A negative electrode structure for a secondary battery (10) includes: a body (12) that is in a form of a foil or a thin plate and contains zinc as a base material; and a non-electron conductive film (11) provided on at least a first surface of the body (12). The film (11) is stretchable. The film (11) includes: an opening portion (13) formed to expose a portion of a first surface of the body (12); and an electrode reaction inhibiting portion (14) that surrounds the opening portion (13) and inhibits an electrode reaction in the body (12). The film (11) is attached to the body (12) in a liquid-tight manner.

Fig. 1

EP 4 418 355 A1

**Description**

**Technical Field**

The present invention relates to a negative electrode structure and a secondary battery that includes the same.

**Background Art**

Zinc is used as a negative electrode material for batteries that can be used in aqueous solutions, and has a theoretical amount of electricity that can be stored per unit volume thereof (also referred to as "volume capacity density") of greater than 5000 Ah/L, which is twice or more of that of lithium that is also used as a negative electrode material for batteries. In addition, zinc has the lowest standard electrode potential among the negative electrode materials that can be in aqueous solutions, and thus can make the electromotive force of the batteries that use aqueous solutions to be higher than that of other negative electrode materials. Taking advantage of these characteristic features, a zinc air battery has been commercialized as a primary battery for hearing aids. On the other hand, a zinc secondary battery that is a secondary battery that uses zinc as a negative electrode active material has not yet been put into practical use. One of the reasons is that, when zinc is used as a negative electrode material in a secondary battery, the zinc secondary battery has a short service life due to poor cycle characteristics of the negative electrode. Specifically, an internal short circuit may occur as a result of zinc generated in the negative electrode migrating to the positive electrode while a charge discharge cycle is performed about several to several hundred times, or a wrong determination that the zinc secondary battery has reached its service life may be made as a result of a reduction in capacity retention rate such as the initial charge discharge capacity decreasing to a half or less due to repetition of the charge discharge cycle. The number of charge discharge cycles available varies depending on various conditions such as charge discharge rate, current density per unit weight of zinc or per unit area of the negative electrode that contains zinc as an active material, and operating temperature.

In the negative electrode of the zinc secondary battery, zinc is generated during charge, and zinc oxide is generated during discharge. Zinc and zinc oxide are both used as negative electrode active materials in the zinc secondary battery. In the specification of the present application, the term "active material" may refer to either one or both of zinc and zinc oxide. An internal short circuit and a reduction in the capacity retention rate that occur in the zinc secondary battery are relevant to a reaction between zinc and zinc oxide in the negative electrode. The relevance will be described below. Among zinc secondary batteries, a zinc secondary battery in which an alkaline aqueous solution is used as an electrolyte has been most studied. In the zinc secondary battery, the following two reactions take place during discharge.

$$Zn+4OH^-\rightarrow Zn(OH)_4^{2-}+2e^- \qquad \cdots(1)$$

$$Zn(OH)_4^{2-}\rightarrow ZnO+H_2O+2OH^- \qquad \cdots(2)$$

On the other hand, the following two reactions take place during charge, which are opposite to the above-described reactions.

$$ZnO+H_2O+2OH^-\rightarrow Zn(OH)_4^{2-} \qquad \cdots(3)$$

$$Zn(OH)_4^{2-}+2e^-\rightarrow Zn+4OH^- \qquad \cdots(4)$$

The formulas (1) and (2) indicate that Zn (solid) transfers two electrons to the negative electrode and transforms into $Zn(OH)_4^{2-}$ (zincate ion), and is dissolved in an alkaline aqueous solution that is an electrolyte, and ZnO (solid) is deposited on the negative electrode from the alkaline aqueous solution. On the other hand, the formula (3) and (4) indicate that $Zn(OH)_4^{2-}$ dissolved in the alkaline aqueous solution from ZnO receives two electrons from the negative electrode, and Zn (solid) is deposited on the negative electrode. Accordingly, the discharge reaction that converts zinc into zinc oxide or the charge reaction that converts zinc oxide into zinc requires that $OH^-$ and $Zn(OH)_4^{2-}$ that are present in the alkaline aqueous solution are reactive with Zn and ZnO that are solids, and the above-described reactions take place in portions where the active material is in contact with the alkaline aqueous solution.

Zinc and zinc oxide have densities of 7.14 g/cm$^3$ and 5.61 g/cm$^3$ (the values being obtained at a temperature close to room temperature), respectively. When the densities are converted to molar volume (the volume per one mole), zinc has a density of 9.16 cm$^3$/mol, and zinc oxide has a density of 14.5 cm$^3$/mol. Based on the foregoing, an example of a volume change that occurs in the negative electrode of the zinc secondary battery will be described. During discharge, one mole of zinc transforms into one mole of zinc oxide that is the same substance amount. At this time, the volume expands to about 1.6 times. Conversely, during charge, zinc oxide transforms into zinc, and the volume shrinks to 63% of the original volume of zinc oxide. A large volume expansion and a volume shrinkage during charge and discharge reactions as described above cause cracking and detachment in the zinc negative electrode. In a cracked portion, the electron conductivity decreases remarkably. When the cracking proceeds, the electron conductivity is lost only in that portion, and the portion can no longer be used in the charge discharge process. This, of course, causes a reduction in the capacity retention rate. In addition, when the cracked portion of the zinc negative electrode comes into contact with the positive electrode side, an internal short circuit occurs, and an internal short circuit also occurs when the cracked portion is detached from the zinc negative electrode and eventually falls off, and comes into contact with the positive electrode.

Furthermore, zinc is known as a metal that is likely to cause a so-called dendritic growth (dendrites) that is the growth of protruding metal crystals that grow in a specific direction and are branched. In the zinc secondary battery, the dendritic growth and the internal short circuit described above also cause a reduction in the capacity retention rate. However, the dendritic growth is the result of an increase in the reaction speed of the charge and discharge reactions at a specific location on the negative electrode of the zinc secondary battery. As described above, when the electron conductivity is lost in portions due to the volume expansion and the volume shrinkage in the zinc negative electrode and the cracking and detachment in the zinc negative electrode, it can be considered that the locations in the zinc negative electrode where the reactions can take place are limited, and thus the reactions concentratedly take place in specific locations, causing locations where the reaction speed is high. To address this, various studies are conducted to solve the problem encountered with the negative electrode of the zinc secondary battery, and information on techniques invented thus far has been disclosed. For example, Patent Literatures 1 to 15 disclose techniques regarding a solid electrolyte and a separator that separates a negative electrode and a positive electrode from each other, to solve the above-described problems.

For example, Patent Literature 1 discloses an electrochemical cell that is useful to improve the performance of the electrochemical cell such as cycle life, energy, and power, wherein the electrochemical cell includes a positive electrode, a negative electrode, and a separator that has ion conductivity and electron insulation and is positioned between the positive electrode and the negative electrode. It is also disclosed that the separator used in the electrochemical cell is useful for managing and controlling dendrite formation in metal batteries such as a lithium battery, an alkaline battery, a zinc battery, and a lead battery.

Also, Patent Literature 2 discloses a separator for zinc negative electrode secondary battery, wherein the separator includes a center portion and a peripheral portion that surrounds the outer periphery of the center portion, and at least a portion of the peripheral portion has a contact angle (determined in accordance with the 0/2 method) larger than that of the center portion.

Also, Patent Literature 3 discloses a method for producing a separator for zinc negative electrode secondary battery that includes: an impregnating step of impregnating a non-woven fabric with a dispersion solution that contains a layered double hydroxide; and a drying step of drying the non-woven fabric with the dispersion solution.

Also, Patent Literature 4 discloses a secondary battery, in which an increase in capacity can be expected, stability during charge discharge process is high, and a problem of short circuits caused by zinc dendrites does not occur, wherein the secondary battery includes: a positive electrode that contains, as a positive electrode active material, a layered double hydroxide (LDH) that contains at least one selected from the group consisting of Ni, Fe, and Mn; a negative electrode that contains, as a negative electrode active material, a layered double hydroxide (LDH) that contains at least one selected from the group consisting of Cu, Al, and Zn; an alkaline electrolyte solution (liquid electrolyte) and/or a hydroxide ion conductive solid electrolyte.

Also, Patent Literature 5 discloses a negative electrode structure for zinc secondary battery that can ensure an efficient conductive path for hydroxide ions between positive and negative electrodes and can effectively prevent a short circuit between the positive and negative electrodes caused by zinc dendrites while improving the space efficiency in the battery, wherein the negative electrode structure includes: a porous current collector plate that is formed using a porous metal; a negative electrode active material layer that is provided on one side of the porous current collector plate and contains zinc and/or zinc oxide; and a hydroxide ion conductive ceramic separator that is provided on a side of the porous current collector plate that is opposite to the negative electrode active material layer, and that has no through holes or no air permeability and is thus highly dense, as well as a zinc secondary battery including the negative electrode structure.

Also, Patent Literature 6 discloses a battery that includes a separator that contains inorganic particles for preventing a short circuit, wherein the inorganic particles are unlikely to be detached from the separator.

Also, Patent Literature 7 discloses a zinc secondary battery that includes a separator structure that includes a hydroxide ion conductive separator, wherein overcharge resistance can be improved while ensuring excellent separator characteristics that are effective for preventing a short circuit caused by zinc dendrites.

Also, Patent Literature 8 discloses a secondary battery in which a plurality of unit cells are provided with good space efficiency while reliably separating positive and negative electrodes from each other using a hydroxide ion conductive ceramic separator, wherein the secondary battery includes: a columnar porous substrate that includes a plurality of cell holes arranged in parallel to each other from a first end face to a second end face and/or from the second end face to the first end face; positive electrodes and negative electrodes that are provided in the plurality of cell holes alternately for each hole or for each hole line; positive electrode inner current collectors that are inserted into the positive electrodes and extend to the first end face or an outer surface; negative electrode inner current collectors that are inserted into the negative electrodes and extend to the second end face, the outer surface, or the first end face; hydroxide ion conductive ceramic separators that are formed in inner wall surfaces of the cell holes and separate the positive electrodes and/or the negative electrodes from the porous substrate; and a liquid electrolyte.

Also, Patent Literature 9 discloses a separator for zinc secondary battery that can effectively suppress a short circuit caused by zinc dendrites, wherein the separator for zinc secondary battery allows hydroxide ions to selectively pass through between positive and negative electrodes in the zinc secondary battery, and includes a porous film that has pores that can separate the hydroxide ions from zinc complex ion $Zn(OH)_4^{2-}$ due to the molecular sieve effect.

Also, Patent Literature 10 discloses a separator structure that can reliably separate the positive electrode side and the negative electrode side from each other in a zinc secondary battery, wherein the separator structure does not have air permeability as a whole, and the separator structure includes: a ceramic separator that is composed of an inorganic solid electrolyte body and has hydroxide ion conductivity but does not have air permeability; and an outer peripheral member that is provided along an outer periphery of the ceramic separator and is composed of at least one of a resin frame and a resin film.

Also, Patent Literature 11 discloses, as a porous separator that can more effectively suppress or delay a short circuit between positive and negative electrodes in a secondary battery caused by dendrites and the growth thereof, a multi-layer porous separator for separating a positive electrode and a negative electrode from each other in a secondary battery, wherein the multi-layer porous separator includes: a first layer and a third layer that are spaced apart from each other and oppose each other, and are formed using a porous ceramic; and a second layer that is provided between the first layer and the third layer and is formed using a porous ceramic that is more porous than the porous ceramic used to form the first layer and the third layer and/or a space.

Also, Patent Literature 12 discloses a separator and a battery that can suppress a shape change of an active material caused by long-term usage of the battery, wherein the separator is used in the battery, the separator has a multi-layer structure that includes an insulating layer and a conductive layer, and the battery includes the separator, electrodes, and an electrolyte.

Also, Patent Literature 13 discloses a secondary battery that can reliably achieve a service life longer than that of a conventional secondary battery, wherein a separator and an aqueous electrolyte are provided in a region between electrode surfaces of positive and negative electrodes, the separator contains a particulate active material (noble potential active material particles Am) whose potential is more noble than the potential of the negative electrode such that the particulate active material is present along a surface of the separator, and the noble potential active material particles Am of the separator dissolve dendrites.

Also, Patent Literature 14 discloses a separator system for an electrochemical system that provides electronic properties, mechanical properties, and chemical properties that are useful for a variety of applications including electrochemical storage and conversion. It is disclosed that, for example, embodiments provide structural, physical and electrostatic attributes useful for managing and controlling dendrite formation in lithium based batteries and zinc based batteries and for improving the cycle life and rate capability of electrochemical cells including silicon anode based batteries, air cathode based batteries, and redox flow batteries.

Also, Patent Literature 15 discloses a metal air secondary battery in which a metal dendrite short circuit is suppressed using a conductive oxide ceramic as a separator.

Furthermore, attempts are made to solve the problem of a zinc secondary battery having a short service life due to the negative electrode of the zinc secondary battery, and Patent Literatures 16 to 21 and Non-Patent Literatures 1 to 3 disclose how to improve the service life from various viewpoints such as zinc and zinc oxide used as negative electrode active materials, another component that constitutes the negative electrode used together with zinc and zinc oxide, the composition ratio thereof, and other components.

Also, Patent Literature 16 discloses a negative electrode used in a zinc secondary battery, wherein the negative electrode contains titanium oxide and a zinc material that is at least one selected from the group consisting of zinc, zinc oxide, a zinc alloy, and a zinc compound.

Also, Patent Literature 17 discloses a metal secondary battery negative electrode material in which dendrite formation is suppressed, wherein the metal secondary battery negative electrode material includes a nano-sheet of a metal oxide supported on a carbonaceous conductive support, and a metal that constitutes the metal oxide is titanium, ruthenium, or niobium.

Also, Patent Literature 18 discloses a zinc negative electrode material mixture for forming a negative electrode for a battery that has excellent economic performance, excellent safety, and excellent battery performance, wherein the zinc negative electrode material mixture contains a zinc-containing compound and a conductive aid, the zinc-containing compound and/or the conductive aid contains particles with an average particle size of 1000 $\mu$m or less and/or particles with an aspect ratio (width to height) of 1.1 or more.

Also, Patent Literature 19 and Non-Patent Literature 1 disclose that cycle characteristics are improved using a zinc electrode for a secondary battery that includes a network composed of a zinc sponge with void spaces and in which zinc oxide is formed as a shell on the zinc surface.

Also, Patent Literature 20 discloses a method for covering zinc particle surface with a metal oxide (Ti oxide, Zr oxide, or the like).

Also, Patent Literature 21 discloses an ion conductive film and a secondary battery in which the ion conductive film is integrated with a zinc negative electrode.

Also, Non-Patent Literature 2 discloses zinc dissolution by performing surface treatment using an anion exchange film or the like for the purpose of suppressing zinc dendrites.

Also, Non-Patent Literature 3 discloses suppression of deposition of dendrites by controlling diffusion of zinc using a nanoporous electrode.

**Citation List**

Patent Literature

Patent Literature 1: WO2013/154623 A1
Patent Literature 2: JP 2018-147739A
Patent Literature 3: JP 2018-147738A
Patent Literature 4: JP 2018-133324A
Patent Literature 5: JP 2018-26205A
Patent Literature 6: US 2019/0123319 A1
Patent Literature 7: JP 2017-091949A
Patent Literature 8: JP 2016-201199A
Patent Literature 9: JP 2016-194990A
Patent Literature 10: JP 2016-189356A
Patent Literature 11: JP 2016-170944A
Patent Literature 12: JP 2016-146263A
Patent Literature 13: JP 2014-222570A
Patent Literature 14: WO2013/154623 A1
Patent Literature 15: JP 2012-104273A
Patent Literature 16: JP 2019-21518A
Patent Literature 17: WO 2014/069541
Patent Literature 18: JP 2014-026951A
Patent Literature 19: US 2018/0130998 A1
Patent Literature 20: US 2019/0214636 A1
Patent Literature 21: US 2015/0364790 A1

Non-Patent Literature

Non-Patent Literature 1: J. F. Parker, C. N. Chervin, I. R. Pala, M. Machler, M. F. Burz, J. W. Long, D. R. Rolison, Science, Vol. 356, pp. 415 - 418 (2017)
Non-Patent Literature 2: K. Miyazaki, Y S. Lee, T. Fukutsuka, T. Abe, Electrochemistry, Vol. 80, No. 10, pp. 725 - 727 (2012)
Non-Patent Literature 3: R. Koda, K. Fukami, T. Sakka, Y H. Ogata, ECS Electrochemistry Letter, Vol. 2, pp. D9 - D11 (2013)

**Summary of Invention**

As shown in the patent literatures and the non-patent literatures described above as examples, various attempts have been made to extend the charge/discharge cycle life of a negative electrode for a zinc secondary battery. However, none of the techniques developed thus far sufficiently solved the problems caused by a volume expansion and a volume shrinkage of an active material that is an inevitable phenomenon that occurs when a zinc negative electrode is used in a secondary battery. That is, a negative electrode for a zinc secondary battery that solves the above-described problems and has sufficient charge/discharge cycle durability has not yet been provided. In addition, even when the negative electrode of the zinc secondary battery being modified, and as a result, as the voltage or the charge discharge capacity with respect to the charge/discharge cycle, several hundred cycles or more is obtained, the result is merely a result obtained in a charge discharge test condition of a very small charge discharge rate or current density (a value obtained by dividing the electric current by the negative electrode area). Specifically, even when the negative electrode of the zinc secondary battery is operated at a charge discharge rate or a current density as large as 1 C or more or 10 mA/cm$^2$ or more, no reduction in battery capacity or no large change in charge discharge voltage is observed even at 1,000 cycles or more, and also cracking or detachment of the negative electrode, or fall-off of the negative electrode material is not prevented. Here, 1 C is also known as the one-hour rate, and corresponds to the electric current required to charge or discharge the battery capacity or the negative electrode capacity for one hour. For example, in the case of a battery with a battery capacity of 1 Ah, 1 C means that the battery is charged or discharged at an electric current of 1 A. As described above, the negative electrode of the zinc secondary battery is required to have excellent resistance to repetition of charge and discharge and achieve a high charge discharge rate while having such excellent repetition resistance. However, a negative electrode for a zinc secondary battery that can achieve these characteristics has not been provided yet.

Furthermore, in a conventional negative electrode for a zinc secondary battery, a current collector that is different from the active material was contained as a constituent material. For example, the conventional negative electrode was produced by shaping, as a current collector for the zinc negative electrode, a material, such as copper, that has good oxidation resistance in an aqueous solution into a plate, a net, a thin film, or a wire, and combining the current collector with an active material such as zinc or zinc oxide, or a material that contains both zinc and zinc oxide. However, the material used to produce the current collector was more expensive than zinc and zinc oxide that are used as the active materials. Accordingly, there has been a demand for a negative electrode for a zinc secondary battery that does not require such an expensive current collector, but the demand has not yet been satisfied. There has also been another problem that a step of combining the current collector with the active material is required, and also a step of preparing a mixture that contains either one or both of zinc and zinc oxide that are active materials and another component and forming the mixture into a state suitable to be combined with the current collector such as, for example, a kneaded product, a slurry, or a sprayable suspension state is required prior to the step of combining the current collector with the active material.

In order to solve various problems described above, the inventors of the present application have conducted in-depth studies and come up with an idea of, in a negative electrode used in a zinc secondary battery, suppressing shape changes of the zinc negative electrode such as cracking and detachment caused by a volume expansion and a volume shrinkage during charge and discharge due to the difference in molar volume between zinc and zinc oxide described above. In this way, they finally accomplished the negative electrode structure for a secondary battery of the present invention.

Specifically, the present invention provides a negative electrode structure for a secondary battery, comprising:

a body that is in a form of a foil or a thin plate and contains zinc as a base material; and
a non-electron conductive film provided on at least a first surface of the body, wherein the film is stretchable,

the film includes:

an opening portion formed to expose a portion of the first surface of the body; and
an electrode reaction inhibiting portion that defines a perimeter of the opening portion and inhibits an electrode reaction in the body, and

the film is attached to the body in a liquid-tight manner.

Also, the present invention provides a secondary battery that includes the negative electrode structure for a secondary battery described above.

**Brief Description of Drawings**

[Fig. 1] Fig. 1 is a perspective view schematically showing a negative electrode material for zinc secondary battery according to an embodiment of the present invention.
[Fig. 2] Fig. 2 is a perspective view schematically showing the negative electrode material for zinc secondary battery according to the embodiment of the present invention.

[Fig. 3] Fig. 3 is a schematic diagram showing an inter-electrode area used to calculate the circulation rate of an electrolyte solution.

[Fig. 4] Fig. 4 is a graph showing a relationship between average discharge voltage, average charge voltage, and cycle number of a zinc nickel secondary battery obtained in Example 1.

[Fig. 5] Fig. 5 is a graph showing a relationship between capacity retention rate and cycle number of the zinc nickel secondary battery obtained in Example 1.

[Fig. 6] Fig. 6 is a graph showing a relationship between average discharge voltage, average charge voltage, and cycle number of a zinc nickel secondary battery obtained in Example 2.

[Fig. 7] Fig. 7 is a graph showing a relationship between capacity retention rate and cycle number of the zinc nickel secondary battery obtained in Example 2.

[Fig. 8] Fig. 8 is a graph showing a relationship between average discharge voltage, average charge voltage, and cycle number of a zinc nickel secondary battery obtained in Comparative Example 1.

[Fig. 9] Fig. 9 is a graph showing a relationship between capacity retention rate and cycle number of a zinc nickel secondary battery obtained in Comparative Example 1.

[Fig. 10] Fig. 10 is a scanning electron microscope image showing a surface state of a zinc foil included in a negative electrode structure used in Example 3 before a charge discharge test is performed.

[Fig. 11] Fig. 11 is a scanning electron microscope image showing a surface state of the zinc foil included in the negative electrode structure used in Example 3 after 514 charge/discharge cycles.

[Fig. 12] Fig. 12 is a scanning electron microscope image showing a surface state of the zinc foil included in the negative electrode structure used in Example 3 after 901 charge/discharge cycles.

[Fig. 13] Fig. 13 is a graph showing a relationship between average discharge voltage, average charge voltage, and cycle number of a zinc nickel secondary battery obtained in Comparative Example 2.

[Fig. 14] Fig. 14 is a graph showing a relationship between capacity retention rate and cycle number of the zinc nickel secondary battery obtained in Comparative Example 2.

[Fig. 15] Fig. 15 is a digital microscope image showing a surface state of a separator included in the zinc nickel secondary battery produced in Comparative Example 2 after 24 charge/discharge cycles.

**Description of Embodiments**

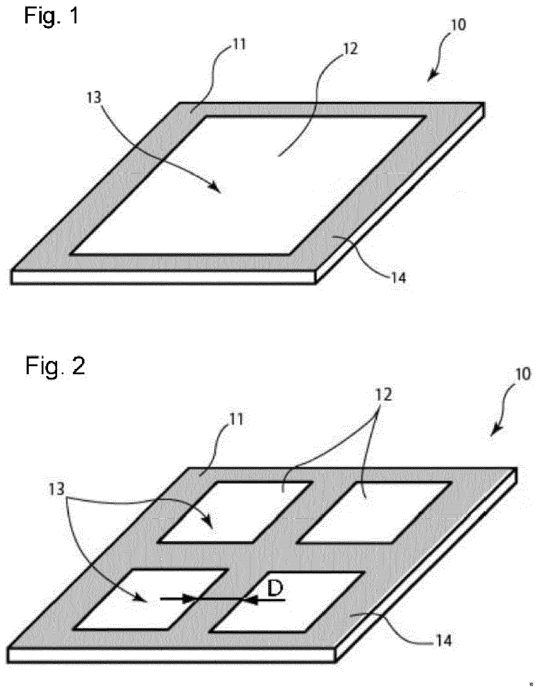

Hereinafter, the present invention will be described based on preferred embodiments thereof with reference to the drawings. Fig. 1 shows a negative electrode structure for a secondary battery according to an embodiment of the present invention. A negative electrode structure 10 for a secondary battery shown in Fig. 1 includes: a body 12 that is in the form of a foil or a thin plate and contains zinc as a base material; and a non-electron conductive film 11 provided on at least one surface of the body 12. The contour of the body 12 and the contour of the film 11 have the same shape and the same dimensions.

The expression "a body contains zinc as a base material" used in the specification of the present application means that the content of the zinc element in the body is preferably 80 mass% or more. The content of the zinc element can be determined through measurement using ICP emission spectroscopy. Also, the expression "a body is in a form of a foil or a thin plate" used in the specification of the present application means that the body includes two opposing main surfaces, and the thickness between the main surfaces is preferably 500 $\mu$m or less. There is no particular limitation on the area of the body as viewed in a plan view. Appropriate dimensions are selected according to the dimensions of the secondary battery to which the negative electrode structure of the present invention is applied.

The body 12 may further contain bismuth. As a result of the body 12 containing bismuth, the charge/discharge cycle characteristics of the secondary battery that includes the negative electrode structure 10 are further improved, and the polarization during charge and discharge reactions in the negative electrode structure 10 is reduced. As a result, it is possible to obtain an advantageous effect that the discharge voltage of the secondary battery increases and the charge voltage of the secondary battery decreases. The inventors of the present application consider that the reason is as follows.

The standard electrode potential of bismuth for a redox reaction represented by the formula (5) is 0.317 V

$$Bi^{3+} + 3e \leftrightarrows Bi \qquad \bullet\bullet\bullet(5)$$

On the other hand, the standard electrode potential of zinc and zincate ion for a redox reaction represented by the formula (6) is -1.29 V, which is lower than the standard electrode potential of bismuth by about 1.5 V

$$Zn(OH)_4{}^{2-} + 2e^- \leftrightarrows Zn + 4OH^- \qquad \bullet\bullet\bullet(6)$$

Accordingly, it is unlikely that bismuth contained in the body 12 is oxidized at a potential close to the potential at which the negative electrode structure 10 is charged and discharged irrespective of charging or discharging. There is a possibility that bismuth forms $Bi(OH)_3$ through a chemical reaction in water and an alkaline aqueous solution. However, in this case as well, there is little need to give consideration to dissolution of bismuth. In the negative electrode structure 10, zinc is converted into zinc oxide during discharge, and zinc oxide is converted into zinc during charge. At this time, it is considered that, due to the presence of Bi and $Bi(OH)_3$, a buffering effect of buffering a large volume change that occurs between zinc and zinc oxide as described above is exhibited. That is, irrespective of either zinc or zinc oxide, a mass (agglomerate) of a certain size is formed, and the interface of the agglomerate usually includes a region called "grain boundary". Accordingly, it is considered that the effect of buffering the volume change described above is exhibited in the grain boundary region or the agglomerate.

As will be shown in the example section, which will be described later, a secondary battery that has the negative electrode structure that contains bismuth also has an advantage that, even when the battery is repeatedly charged and discharged, a reaction product produced in the negative electrode structure 10 is unlikely to be detached and fall off therefrom. The battery also has an advantage that a non-uniform distribution of zinc and zinc oxide caused by the charge discharge process is unlikely to occur, and also, cracking at the grain boundary and the growth of agglomerates that inevitably grow into dendrites as compared with before the battery is charged and discharged are also unlikely to occur.

Furthermore, the secondary battery that includes the negative electrode structure that contains bismuth also has an advantage that, as compared with a secondary battery that includes the negative electrode structure that does not contain bismuth, the discharge voltage is increased, and the charge voltage is decreased, improving voltage efficiency (discharge voltage/charge voltage) when the batteries are operated under the same charge discharge conditions.

From the viewpoint of making the above-described various advantageous effects more remarkable, the bismuth content in the body 12 based on mass is preferably 100 ppm or more and 10000 ppm or less, more preferably 200 ppm or more and 8000 ppm or less, and even more preferably 300 ppm or more and 6000 ppm or less. The bismuth content in the body can be determined through measurement using ICP emission spectroscopy, which will be described later.

Although the presence state of bismuth in the body 12 is not clearly known, it is preferable that bismuth is not in a solid solution state with zinc. As used herein, the term "solid solution state" refers to a state in which the crystal structure of zinc is changed by addition of a metal element. When a cross section of the body 12 that contains bismuth is observed in elemental mapping using a backscattered electron image obtained using a scanning electron microscope or energy-dispersive X-ray spectroscopy (characteristic X-ray detection method), bismuth is preferably present in a dispersed manner in the body 12.

Next, the film 11 included in the negative electrode structure 10 of the present invention will be described. As shown in Fig. 1, the film 11 is in direct contact with a main surface of the body 12. Accordingly, there is no layer between the film 11 and the body 12. Furthermore, the film 11 includes: an opening portion 13 formed to expose a portion of at least one of two main surfaces of the body 12; and an electrode reaction inhibiting portion 14 that defines a perimeter of the opening portion 13. The electrode reaction inhibiting portion 14 is a portion in which the electrode reaction of zinc that constitutes the body 12 is inhibited. For this purpose, the electrode reaction inhibiting portion 14 is preferably formed using a material that is impermeable or less permeable to an electrolyte solution used in the battery. The term "impermeable" refers to the property of not allowing an electrolyte solution to flow to the body 12 side when the battery that includes the negative electrode structure of the present invention is in operation. The term "less permeable" refers to the property of allowing an electrolyte solution to flow to the body 12 side to such a degree that an electrode reaction does not substantially occur in a portion of the body 12 that opposes the electrode reaction inhibiting portion 14 when the battery that includes the negative electrode structure of the present invention is in operation. Also, the material that constitutes the film 11 has the property of not allowing an electrolyte solution to pass therethrough and also has the property of not allowing ions required for an electrode reaction such as $OH^-$ or $Zn(OH)_4^{2-}$ to such a degree that an electrode reaction does not substantially occur in a portion of the body 12 that opposes the electrode reaction inhibiting portion 14.

For the purpose of forming the electrode reaction inhibiting portion 14 in the film 11, the film 11 is formed using a non-electron conductive material. The term "non-electron conductive" used in the specification of the present application refers to the property of preventing the occurrence of electron conduction even when the film 11 comes into contact with the positive electrode provided to oppose the negative electrode structure in the zinc secondary battery, and preventing the zinc secondary battery from being short-circuited. For example, when the volume resistivity is $10^4$ $\Omega \cdot cm$ or more, the above-described short circuit can be avoided.

In the embodiment shown in Fig. 1, the electrode reaction inhibiting portion 14 defines a perimeter of opening portion 13, and thus the opening portion 13 is surrounded by the electrode reaction inhibiting portion 14. That is, the perimeter of opening portion 13 has a closed shape. Instead of this shape, a portion of the perimeter of opening portion 13 may be open, and the portion of the opening portion 13 may extend to a perimeter of the body 12. That is, the perimeter of the opening portion 13 may have an open shape.

The opening portion 13 shown in Fig. 1 has a rectangular shape. However, there is no limitation on the shape of the opening portion 13. The opening portion 13 may have a shape other than a rectangular shape such as a circular shape or an elliptic shape. Alternatively, the opening portion 13 may have a shape obtained by combining these shapes.

As a result of the opening portion 13 and the electrode reaction inhibiting portion 14 being formed in the film 11, in the negative electrode structure of the present invention, an electrode reaction portion, or in other words, a portion where the body 12 is exposed at the opening portion 13, and a non-electrode reaction portion, or in other words, the electrode reaction inhibiting portion 14 are clearly divided from each other. That is, an electrode reaction takes place only in the portion where the body 12 is exposed at the opening portion 13. As a result, as compared with a conventional zinc negative electrode that does not include the film 11, cracking and detachment caused by a volume expansion and a volume shrinkage between zinc and zinc oxide during charge and discharge are unlikely to occur. In portions where cracking or detachment has occurred, the conductivity decreases, which leads to a reduction in capacity. However, in the negative electrode structure of the present invention, this problem is suppressed. Furthermore, because a non-uniform distribution of zinc and zinc oxide caused by the charge discharge process is unlikely to occur, and thus the growth of dendrites is suppressed, and the occurrence of an internal short circuit is thereby efficiently suppressed.

From the viewpoint of making this advantageous effect more remarkable, the opening portion 13 has an area of preferably 0.03 mm$^2$ or more and 400000 mm$^2$ or less, more preferably 0.1 mm$^2$ or more and 100000 mm$^2$ or less, even more preferably 0.3 mm$^2$ or more and 40000 mm$^2$ or less, and yet even more preferably 1 mm$^2$ or more and 2500 mm$^2$ or less.

In the case where the area of the opening portion 13 is represented by a circle equivalent diameter, the circle equivalent diameter is preferably 0.1 mm or more and 300 mm or less, more preferably 0.3 mm or more and 100 mm or less, even more preferably 1 mm or more and 30 mm or less, and yet even more preferably 1 mm or more and 10 mm or less.

From the viewpoint of the capacity density of the negative electrode and the energy density of the battery, the ratio of the area of the opening portion 13 relative to the apparent area of the film 11 is preferably 0.01% or more and 99.9% or less, more preferably 1% or more and 99% or less, even more preferably 10% or more and 90% or less, and yet even more preferably 50% or more and 90% or less.

The electrode reaction inhibiting portion 14 of the film 11 has a width of preferably 0.1 mm or more and 10 mm or less, more preferably 0.5 mm or more and 5 mm or less, and even more preferably 0.5 mm or more and 1 mm or less, the width being a width of the narrowest portion, or in other words, a width at a position where the distance between the opening portion 13 and the perimeter of the film 11 is shortest. When the width of the electrode reaction inhibiting portion 14 is within the above-described range, the electrode reaction of the zinc foil of the body 12 exposed at the opening portion 13 can be appropriately controlled. When the width of the narrowest portion is very small, the electrode reaction may take place in the portion that opposes the electrode reaction inhibiting portion 14 via the portion of the body 12 exposed at the opening portion 13.

The film 11 is attached to the body 12 in a liquid-tight manner. With this configuration, it is possible to efficiently prevent an electrolyte solution to permeate into the portion of the body 12 that opposes the electrode reaction inhibiting portion 14 of the film 11. As a result, in the negative electrode structure, a portion in which a volume expansion and a volume shrinkage caused by charge and discharge reactions between zinc and zinc oxide do not occur is formed, and even when the charge discharge cycle is repeated, the portion in which a volume expansion and a volume shrinkage do not occur functions as a path for providing stable electron conductivity. It is therefore possible to prevent cracking and detachment caused by a volume expansion and a volume shrinkage from spreading in the surface direction of the body 12, and thus the reduction in capacity caused by cracking and detachment and the occurrence of an internal short circuit are efficiently suppressed. Accordingly, the expression "the film 11 is attached to the body 12 in a liquid-tight manner" used in the specification of the present application means that the film 11 and the body 12 are tightly attached to such a degree that an electrolyte solution does not flow into between the film 11 and the body 12 when the battery that includes the negative electrode structure of the present invention is in operation.

Whether the film 11 and the body 12 are attached in a liquid-tight manner can be determined by removing the film 11 after the battery has been disassembled and checking visually or using a color difference meter whether an electrolyte solution does not permeate into the film 11. For making the determination, a region of the body 12 that opposes the electrode reaction inhibiting portion 14, a region of the body 12 that does not oppose the electrode reaction inhibiting portion 14, and a region that is not immersed in the electrolyte solution are observed. When color difference $\Delta E^*ab$ between the regions is preferably 0 or more and 10 or less, more preferably 0 or more and 9 or less, and even more preferably 0 or more and 8 or less, it can be determined that the regions have the same color, and thus the film 11 and the body 12 are attached in a liquid-tight manner. The color difference $\Delta E^*ab$ is based on L*a*b* color system (CIE 1976 (L*a*b*) color system) standardized by the International Commission on Illumination (CIE) in 1976. In the L*a*b* color system, L* value represents brightness, a* value and b* value represent directions of colors, where a* represents a substantially red direction, -a* represents a substantially green direction, b* represents a substantially yellow direction, and -b* represents a substantially blue direction.

The color difference ($\Delta E^*ab$) in the L*a*b* color system is calculated using the formula (7).

$$\text{Color difference } \Delta E^*ab = \{(\Delta L^*)^2 + (\Delta a^*)^2 + (\Delta b^*)^2\}^{1/2} \qquad \bullet\bullet\bullet \ (7)$$

Each of the L* value, the a* value, and the b* value in the L*a*b* color system can be measured in accordance with JIS Z 8781-4 using a chroma color difference meter CR-400 available from Konica Minolta, Inc.. Specifically, measurement is performed by bringing the measurement head of the chroma color difference meter into direct contact with an arbitrarily selected location on the body 12. The measurement is performed three times, and the average value of the measured values is defined as a measurement value.

The film 11 and the body 12 are attached in a liquid-tight manner by preferably, for example, superimposing the film 11 and the body 12 and press-attaching the film 11 and the body 12. When the film 11 and the body 12 are attached using an adhesive, the adhesive may negatively affect the stretchability of the film 11, which will be described later, and it is therefore not preferable to use an adhesive. Accordingly, it is desirable to not use an adhesive when the film 11 and the body 12 are press-attached.

The film 11 is stretchable. The term "stretchable" used in the specification of the present application refers to, when the film 11 is stretched by applying a tensile force and then the tensile force is released, the property of shrinking to the original length of the film 11 or a length close to the original length. Furthermore, more preferably, the film 11 also has the property of expanding to the original length or a length close to the original length when the film 11 is compressed by applying a compression force and the compression force is released. As a result of the film 11 being stretchable, together with an effect of the opening portion 13 formed in the film 11, the following advantageous effects can be obtained.

First, it is possible to suppress a volume change caused by the difference in molar volume between zinc and zinc oxide, or in other words, shape changes of the negative electrode such as cracking and detachment caused by a volume expansion during discharge and a volume shrinkage during charge even when the battery is repeatedly charged and discharged. As a result, it is possible to prevent an internal short circuit that occurs as a result of the reaction speed of charge and discharge reactions in a specific location of the negative electrode being higher than that in other locations to cause a dendritic growth of zinc in the specific location during charge and the dendrites extending to the positive electrode. Due to prevention of the internal short circuit, the battery can be repeatedly charged and discharged more than 1000 cycles. It is also possible to suppress a situation in which, due to cracking and detachment of the negative electrode, the electron conductivity is partially lost in the negative electrode, and the amount of active material that can be used in the charge discharge process decreases. By suppressing the situation, it is possible to suppress a reduction in the capacity retention rate when the charge/discharge cycle is repeated. Also, it is known that the voltage during charge increases when the electron conductivity of the negative electrode decreases, and the voltage efficiency (discharge voltage/charge voltage) decreases when the voltage during discharge decreases. With the negative electrode structure of the present invention, it is possible to suppress a change in charge discharge voltage and a reduction in voltage efficiency. It is also possible to suppress an internal short circuit and a reduction in the capacity retention rate caused by a portion of the negative electrode material falling off from the negative electrode as a result of shape changes of the negative electrode such as cracking and detachment.

From the viewpoint of making this advantageous effect more remarkable, the film 11 has a stretchability represented by stretch parameter Z of preferably 0.5 or more, more preferably 0.6 or more, and even more preferably 0.8 or more. The closer to 1 the stretch parameter Z is, the higher the stretchability.

The stretch parameter Z is a value defined by Z = E2/E1, where E1 represents tensile modulus (MPa) determined from a strain range of 0% or more and 1% or less, and E2 represents tensile modulus (MPa) determined from a strain range of 0% or more and 40% or less. The tensile modulus corresponds to the change rate in the stress strain curve. E1 represents the maximum value of the change rate in the stress strain curve in a strain range of 0% or more and 1% or less. E2 represents the maximum value of the change rate in the stress strain curve in a strain range of 0% or more and 40% or less. The reason that the upper limit value of the strain in calculation of the tensile modulus E2 is set to 40% is that, by applying a 40% strain, the change rate in the stress strain curve starts to saturate.

The stretch parameter Z is measured using a tensile testing machine (TENSILON RTC-13 10A equipped with a non-contact type elongation indicator U-4410 available from A&D Company, Ltd.). As the test piece, a JIS K7127 test piece type 5 is used. Measurement conditions were set as follows: a tensile speed of 50 mm/min; an inter-gauge line distance of 25 mm; a chuck-to-chuck distance of 80 mm; and a test temperature of 23°C, and the arithmetic average value of five test pieces is obtained. Measurement is performed on the vertical direction and the horizontal direction of each film, and the larger one of the measured stretch parameters Z is determined as the stretch parameter Z of the film.

With the negative electrode structure of the present invention that has excellent advantageous effects, it is also possible to obtain an advantageous effect that, in a secondary battery that includes the negative electrode structure of the present invention, the volume of the negative electrode can be reduced. Accordingly, the energy density and the output density per volume of the secondary battery can be improved. Furthermore, with the negative electrode structure of the present invention, the charge discharge capacity density per unit volume can be increased, and it is therefore possible to obtain an additional advantageous effect that the cost of the negative electrode of the secondary battery can be reduced. Also, with the negative electrode structure of the present invention, for the purpose of satisfy the product specification required for the zinc secondary battery, the need for setting an excessive amount of active material relative to the battery capacity when producing the negative electrode can be eliminated, or the excessive amount of negative electrode active material can be reduced as much as possible. In addition, operating a battery at a high current density or a large charge discharge rate, or using a battery by changing the operation current from a low current density to a high current density (from a low rate to a high rate) or vice versa is likely to cause cracking and detachment of the zinc negative electrode. However, with the negative electrode structure of the present invention, an advantageous effect that it is also possible to cope with the operating conditions and the usage of the battery described above can be obtained.

The secondary battery that includes the negative electrode structure of the present invention that has various advantageous effects described above has excellent charge/discharge cycle characteristics, a long service life, a high volume energy density, a high voltage efficiency, a high capacity retention rate for a long period of time, and is low cost. In addition thereto, even when the negative electrode structure of the present invention is used in a secondary battery that contains an aqueous solution and has a large storage capacity, the secondary battery has a very low risk of fire and explosion, and thus simultaneously satisfies a high storage capability, a high level of safety, and a high level of durability for a long term.

From the viewpoint of further enhancing the stretchability of the film 11, the film 11 may have micropores with a size that does not allow an electrolyte solution to permeate therethrough. Having micropores described above contributes to improvement of bendability, flexibility, and processability/moldability of the film 11 and good attachability and tight attachability to the body 12. As a result, in the battery that includes the negative electrode structure 10, the film 11 can even better conform to the volume change that occurs between zinc and zinc oxide caused by a volume expansion and a volume shrinkage due to the charge discharge process. As a result, the stress caused by the volume change is more mitigated. Furthermore, in the body 12 of the negative electrode structure 10, the function of dividing the electrode reaction portion and the non-electrode reaction portion is maintained for a long period of time.

From the viewpoint of easily conforming to the volume change that occurs between zinc and zinc oxide caused by a volume expansion and a volume shrinkage due to the charge discharge process, the film 11 has a thickness of preferably 0.02 mm or more and 0.45 mm or less, more preferably 0.03 mm or more and 0.4mm or less, and even more preferably 0.04 mm or more and 0.3 mm or less. The thickness of the film 11 can be measured in accordance with JIS K 7130: 1999.

The film 11 is preferably formed using a material that easily conforms to the volume change that occurs between zinc and zinc oxide caused by a volume expansion and a volume shrinkage due to the charge discharge process. For example, an organic material such as a resin, a ceramic material, or the like can be used. In particular, it is preferable to use a material that has excellent processability and excellent moldability. Also, it is desirable to use a material that generates no or very small residual stress in the body 12 when the film 11 is attached to the body 12.

As the organic material, it is preferable to use a highly alkali resistant material. Examples of the highly alkali resistant material include: polyolefin resins such as a polyethylene resin, a polypropylene resin, an ethylene-$\alpha$ olefin copolymer, and an ultra-high-molecular-weight polyethylene resin(UHPE); acrylic resins; polyketone resins such as a polyether ether ketone resin(PEEK), and a polyetherketone resin (PEK); polyphenylene resins such as a polyphenylene sulfide resin (PPS) and a modified polyphenylene ether (modified PPE); styrene resins such as acrylonitrile butadiene styrene resin (ABS) and an acrylonitrile styrene resin (AS); epoxy resins such as a bisphenol A-type epoxy resin and a novolac-type epoxy resin; and the like. It is also possible to use a fluorine resin such as polytetrafluoroethylene.

In the case where a fluorine resin such as polytetrafluoroethylene is used, the film 11 preferably has micropores described above from the viewpoint of being capable of enhancing the stretchability of the film 11. The micropores preferably have a small size that does not allow an electrolyte solution to flow therethrough. That is, as described above, the film 11 is preferably impermeable or less permeable to an electrolyte solution.

In the embodiment described above, the film 11 includes one opening portion 13.

However, instead, the film 11 may include a plurality of opening portions 13. Fig. 2 shows a film 11 that includes four opening portions 13. In the embodiment shown in Fig. 2, the four opening portions 13 have the same square shape of the same dimensions. It is preferable that shortest distance D between adjacent opening portions 13 is 0.1 mm or more and 10 mm or less from the viewpoint of inhibiting the electrode reaction in the body 12 that opposes the electrode reaction inhibiting portion 14 for a long period of time and the viewpoint of avoiding a significant reduction in the capacity density of the negative electrode. From the viewpoint of making this advantageous effect more remarkable, it is more preferable that the shortest distance D between adjacent opening portions 13 is 0.5 mm or more and 2 mm or less.

Also, in the embodiment shown in Fig. 2, the four opening portions 13 are independent of each other, with the perimeter of each opening portion 13 being surrounded by the electrode reaction inhibiting portion 14. However, instead of this configuration, in a portion, adjacent opening portions 13 may be connected as long as the intended advantageous effect of the present invention is not impaired.

Furthermore, in the embodiment described above, the film 11 is attached to either one or both of two main surfaces of the body 12. However, in addition thereto, the film 11 may be attached to a side surface of the body 12.

Furthermore, the body 12 may have a rectangular outer shape as shown in Figs. 1 and 2. Alternatively, the body 12 may have an outer shape other than a rectangular outer shape such as, for example, a polygonal or circular outer shape. Furthermore, a portion of the body 12 may be extended in one direction, and the extended portion may be used as a lead portion that functions as a connection terminal for connecting to the outside. In this case, the negative electrode structure of the present invention also functions as a current collector.

Next, a preferred method for producing a negative electrode structure 10 of the present invention will be described. First, a method for producing a body 12 will be described. The body 12 can be produced using a rolling method, but is preferably produced using an electrolytic method. From the viewpoint of attaching a film 11 to the body 12 in a liquid-tight manner, the body 12 is preferably produced using an electrolytic method.

In the electrolytic method, an anode and a cathode are immersed in an electrolyte solution that contains a zinc source to cause a body 12 to deposit on the cathode. As the electrolyte solution that contains a zinc source, an aqueous solution of zinc sulfate, an aqueous solution of zinc nitrate, an aqueous solution of zinc chloride, or the like can be used. The concentration of zinc in the electrolyte solution is preferably 2 g/L or more and 200 g/L or less from the viewpoint of ensuring the uniformity of the zinc foil.

As the anode used in electrolysis, it is preferable to use a known dimensionally stable electrode (DSE (registered trademark)). As the DSE, for example, an iridium oxide-coated titanium electrode, a ruthenium oxide-coated titanium electrode, or the like is preferably used.

On the other hand, as the cathode, there is no particular limitation on the type of material, and any material that does not affect a reduction of zinc is selected as appropriate. For example, aluminum can be used.

The electrolyte solution preferably further contains a bismuth source as described above in addition to the zinc source. As the concentration of bismuth source in the electrolyte solution, the mass ratio of bismuth relative to the total mass of zinc and a metal element contained in the electrolyte solution is preferably 10 ppm or more and 10000 ppm or less, more preferably 15 ppm or more and 8000 ppm or less, even more preferably 20 ppm or more and 7000 ppm or less, yet even more preferably 30 ppm or more and 6500 ppm or less, yet even more preferably 30 ppm or more and 6000 ppm or less, and yet even more preferably 40 ppm or more and 6000 ppm or less.

The electrolyte solution may further contain an additional compound. As the additional compound, for example, sulfuric acid can be used for the purpose of adjusting the pH of the electrolyte solution.

As a result of studies conducted by the inventors of the present application, it was found that it is advantageous to circulate the electrolyte solution during electrolysis from the viewpoint of making the surfaces of the body 12 have a high level of tight attachability to the film 11. In order to circulate the electrolyte solution, for example, by using an electrolysis apparatus that includes a closed flow path, an electrolysis bath provided in the flow path, and a pump provided in the flow path, the electrolyte solution may be caused to flow through the electrolysis bath in one direction by driving the pump. The anode and the cathode used in electrolysis may be immersed in the electrolysis bath such that they oppose each other. It is preferable that the anode and the cathode are disposed in the electrolysis bath such that their opposing surfaces (the electro-deposition surface in the case of the cathode) are parallel to the flowing direction of the electrolyte solution.

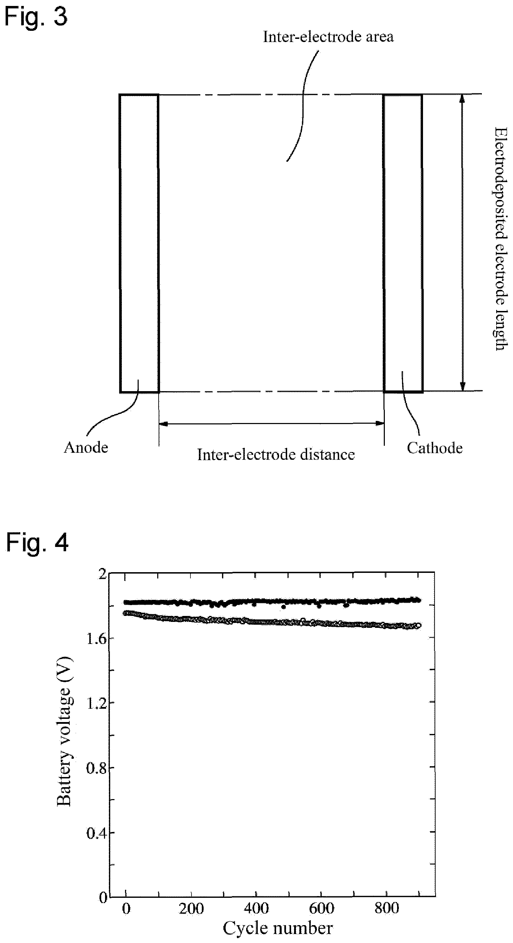

When electrolysis is performed while the electrolyte solution is circulated, it is advantageous to adjust the flow rate, or in other words, the circulation rate of the electrolyte solution from the viewpoint of making the surfaces of the body 12 have a high level of tight attachability to the film 11. More specifically, the circulation rate of the electrolyte solution is set to preferably 0.001 L/(min·mm$^2$) or more and 1 L/(min·mm$^2$) or less, more preferably 0.002 L/(min·mm$^2$) or more and 0.6 L/(min·mm$^2$) or less, even more preferably 0.003 L/(min·mm$^2$) or more and 0.4 L/(min·mm$^2$) or less, and yet even more preferably 0.005 L/(min·mm$^2$) or more and 0.2 L/(min·mm$^2$) or less. The circulation rate is calculated by dividing the flow amount of the electrolyte solution (L/min) by inter-electrode area (mm$^2$). As shown in Fig. 3, the inter-electrode area is represented by a product of inter-electrode distance (mm) and electro-deposition electrode width (mm). In Fig. 3, it is preferable to cause the electrolyte solution to flow in a direction perpendicular to the plane shown in Fig. 3. Also, in Fig. 3, plate-shaped electrodes extend in a direction perpendicular to the plane shown in Fig. 3.

The current density during electrolysis is preferably set to be larger than that used in ordinary zinc electrolysis from the viewpoint of making the surfaces of the body 12 have a high level of tight attachability to the film 11. From this viewpoint, the current density is set to preferably 1000 A/m$^2$ or more and 10000 A/m$^2$ or less, more preferably 1000 A/m$^2$ or more and 6000 A/m$^2$ or less, and even more preferably 1000 A/m$^2$ or more and 4000 A/m$^2$ or less. In contrast, when producing a conventional electrolysis zinc foil, the current density is set to as low as about 500 A/m$^2$.

The electrolyte solution can be subjected to electrolysis in a non-heated or heated state. In the case where the electrolyte solution is subjected to electrolysis in a heated state, the temperature of the electrolyte solution is preferably set to 10°C or more and 90°C or less. The temperature of the electrolyte solution is set to more preferably 20°C or more and 90°C or less, even more preferably 30°C or more and 80°C or less, and yet even more preferably 30°C or more and 70°C or less. Electrolysis is performed until the thickness of the zinc foil reaches the intended value.

After the body 12 has been produced, a film 11 that includes an opening portion 13 and an electrode reaction inhibiting portion 14 is attached to at least one surface of the body 12. As attaching means, press-attaching, fusion, fixation, heat curing, three-dimensional modeling, bonding using an adhesive, or the like can be used. Out of the attaching means, it is preferable to use press-attaching from the viewpoint of being unlikely to reduce the stretchability of the film 11 after attached to the body 12 and the viewpoint of easily attaching the film 11 to the body 12 in a liquid-tight manner. In particular, it is preferable to perform press-attaching without using an adhesive.

In the case where the negative electrode structure 10 produced in the above-described manner is included in a secondary battery, the negative electrode structure 10 is provided to oppose a positive electrode in the secondary battery. Specifically, the negative electrode structure 10 is provided such that one of the main surfaces of the body 12 that includes the opening portion 13 opposes the positive electrode. An electrolyte solution in an amount required for an electrode reaction is present between the negative electrode structure 10 and the positive electrode. When this secondary battery is operated, charge discharge reactions between zinc and zinc oxide take place in a portion of the opening portion 13 where the body 12 is exposed. On the other hand, in the electrode reaction inhibiting portion 14, charge discharge reactions between zinc and zinc oxide are suppressed. As a result, when the secondary battery is repeatedly charged and discharged, it is possible to suppress shape changes of the negative electrode structure 10 such as cracking and detachment caused by a volume change of the negative electrode structure 10 caused by the difference in molar volume between zinc and zinc oxide, or in other words, a volume expansion during discharge and a volume shrinkage during charge. In portions where the shape changes have occurred, conductivity decreases, which leads to a reduction in capacity. However, in the negative electrode structure of the present invention, this problem is suppressed. Furthermore, a non-uniform distribution of zinc and zinc oxide caused by the charge discharge process is unlikely to occur, and thus the growth of dendrites is suppressed, and the occurrence of an internal short circuit is thereby efficiently suppressed.

For the purpose of preventing a short circuit between the positive electrode and the negative electrode structure 10, a separator may be provided between the positive electrode and the negative electrode structure 10. For the separator, for example, a material that allows an electrolyte solution to flow therethrough and does not negatively affect the electrode reaction is used. Examples of the material include nonwoven fabrics made of various types of thermoplastic fibers. Instead of or in addition to a nonwoven fabric, a spacer that has a predetermined thickness may be provided between the positive electrode and the negative electrode structure 10. As the spacer, for example, the reaction space regulating portion disclosed WO 2021/049609 or the like can be used.

In the case where a film 11 that includes an opening portion 13 and an electrode reaction inhibiting portion 14 is attached to each of two main surfaces of the body 12, a positive electrode can be provided to oppose each surface of the negative electrode structure 10.

For the positive electrode used in the secondary battery, for example, nickel hydroxide or the like can be used. As the electrolyte solution, for example, an aqueous solution of potassium hydroxide can be used.

The secondary battery obtained in the above-described manner may be, for example, a nickel-zinc battery, an air-zinc battery, a silver-zinc secondary battery, or a manganese-zinc battery. These secondary batteries can be used in applications including mobile applications, automobile applications, energy storage applications, power load adjustment applications, as well as various types of power storage applications including power transmission applications and auxiliary power transmission applications for trains, aircraft, watercraft, and drones.

In the present invention, the negative electrode structure 10 that is the negative electrode active material has conductivity, and thus the negative electrode structure 10 also functions as a current collector. Accordingly, the negative electrode structure 10 can also be used as a negative electrode without using a current collector.

The present invention has been described above based on a preferred embodiment thereof. However, the present invention is not limited to the embodiment given above.

Regarding the embodiment described above, the present invention further discloses a negative electrode structure for a secondary battery and a secondary battery described below.

[1] A negative electrode structure for a secondary battery, comprising:

a body that is in a form of a foil or a thin plate and contains zinc as a base material; and
a non-electron conductive film provided on at least a first surface of the body, wherein the film is stretchable,

the film includes:

an opening portion formed to expose a portion of the first surface of the body; and
an electrode reaction inhibiting portion that defines a perimeter of the opening portion and inhibits an electrode reaction in the body, and

the film is attached to the body in a liquid-tight manner.

[2] The negative electrode structure for a secondary battery as set forth in clause [1], wherein the body further contains bismuth.

[3] The negative electrode structure for a secondary battery as set forth in clause [2], wherein the body contains 100 ppm or more and 10000 ppm or less of bismuth based on mass.

[4] The negative electrode structure for a secondary battery as set forth in any one of clauses [1] to [3], wherein the film has a thickness of 0.02 mm or more and 0.45 mm or less.

[5] The negative electrode structure for a secondary battery as set forth in any one of clauses [1] to [4], wherein the negative electrode structure also functions as a current collector.

[6] A secondary battery including the negative electrode structure for a secondary battery as set forth in any one of clauses [1] to [5].

[7] The secondary battery as set forth in clause [6],

wherein a positive electrode is provided to oppose the film in the negative electrode structure,
a separator is provided between the positive electrode and the negative electrode structure, and
an electrolyte solution is present between the positive electrode and the negative electrode structure.

Examples

Hereinafter, the present invention will be described specifically based on examples. However, the scope of the present invention is not limited to the examples given below. Unless otherwise stated, the percent sign "%" used herein means "mass%".

Example 1

A body used in a negative electrode structure for a secondary battery of the present invention was produced in the following manner.

(1) Preparation of Electrolyte Solution

Zinc oxide was used as a zinc compound. Bismuth nitrate was used as a bismuth compound. They were dissolved in water together with sulfuric acid to prepare an electrolyte solution. The concentration of zinc in the electrolyte solution was 50 g/L. The concentration of sulfuric acid, which is a value obtained by converting the total amount of sulfate ions to $H_2SO_4$, was 150 g/L. The concentration of bismuth was adjusted to be the bismuth content in an intended zinc foil.

(2) Reduction and Deposition of Zinc

As an anode, a DSE that is an iridium oxide-coated titanium electrode was used. As a cathode, an aluminum plate was used. An electric current was allowed to flow through between the anode and the cathode, with the electrolyte solution being heated to 35°C. The current density was 1000 A/m². The electrolyte solution was circulated at a circulation rate set to 0.029 L/(min•mm²). Electrolysis was performed under the above-described conditions, and a zinc foil was thereby obtained. The obtained zinc foil was used as a body. The obtained body was subjected to ICP emission spectroscopy in accordance with JIS H1111 to obtain the bismuth content. The bismuth content was 710 ppm based on mass, the surface roughness was 0.8 μm, and the thickness was 31 μm.

(3) Production of Negative Electrode Structure

The body was cut into a shape that a 2.5 cm (width) × 5 cm (length) rectangle was removed from one corner of a 3 cm (width) × 9 cm (length) rectangle. In the body, a 3 cm (width) × 4 cm (length) rectangle obtained from the remaining portion left after 2.5 cm (width) × 5 cm (length) rectangle had been removed was defined as "portion A", and the portion A was used in an electrode reaction. Likewise, in the body, a 5 mm (width) × 5 cm (length) rectangle that includes a lengthwise side of the removed 2.5 cm (width) × 5 cm (length) rectangle was defined as "portion B", and the portion B was used as a lead portion for electrically connecting to the outside. Also, a masking material was applied to the lead portion, and dried to prevent the lead portion from coming into contact with the electrolyte solution.

Two stretchable non-electron conductive films (SEF-010 available from Chukoh Chemical Industries, Ltd., each film being made of polytetrafluoroethylene (PTFE), having a thickness of 100 μm, a stretch parameter Z of 0.87, an elongation rate of 10% (measured in accordance with JIS K 7137-2), and also having micropores and liquid-impermeability) each cut into a size slightly larger than that of the portion A were prepared. In one of the films, a hole with a diameter of 5 mm was formed in the center of the film. No hole was formed in the other film. The portion A was placed between the two films, which was then placed between two stainless steel plates that are larger in size than the two films. Then, the whole was set in a uniaxial pressing machine, and pressed at 41.3 MPa for 5 minutes at room temperature to attach the films to both surfaces of the portion A. No adhesive was used to attach the films. In this way, a negative electrode structure in which the zinc foil was exposed at the hole with a diameter of 5 mm at the center of one surface of the portion A, and the remaining portion was covered with the films was produced. The ratio of the area of the hole relative to the apparent area of the film was 1.5%. The films were attached to the portion A in a liquid-tight manner, with no gap that allows the electrolyte solution as described below to permeate therethrough being formed between the films and the portion A.

(4) Production of Secondary Battery

The negative electrode structure produced in the above-described manner and a pre-charged nickel positive electrode (a square of about 50 mm with a thickness of 5 mm) were placed in an acrylic container so as to oppose each other. Then, a nonwoven fabric (46 mm × 50 mm) made of polyolefin material, which is usually used in nickel-hydrogen secondary batteries, was placed between the negative electrode structure and the nickel positive electrode.

As the nickel positive electrode, a nickel positive electrode, which is usually used in nickel-hydrogen secondary batteries, is used. In a fully discharged state, generally, the main component is nickel hydroxide. In a fully charged state, nickel hydroxide is oxidized and the main component is nickel oxyhydroxide.

As the electrolyte solution, an aqueous solution of 6 mol/L potassium hydroxide in which zinc oxide was saturated was used.

A zinc nickel secondary battery was produced in the above-described manner. In the secondary battery, for the purpose of measuring the potential of the negative electrode structure, a zinc wire (with a diameter of 1 mm and a length of about 9 cm) was placed at a position that does not interfere with the space between the positive and negative electrodes, and immersed in the aqueous solution of potassium hydroxide, and this was used as a reference electrode when measuring the potential of the negative electrode structure. With the zinc wire, a masking material was applied to a portion of the zinc wire other than a top end portion of the zinc wire immersed in the aqueous solution of potassium hydroxide, and then dried to prevent the zinc wire from coming into contact with the electrolyte solution. After completion of a test described below, the secondary battery was disassembled, and the color difference ΔE*ab between the region between the film and the portion A and the lead portion was determined using the above-described method, and found to be 5.3, from which it was confirmed that the film and the portion A were attached in a liquid-tight manner.

Test Conditions and Evaluation Results

The zinc nickel secondary battery produced in the above-described manner was charged and discharged at a constant current. A flowing current with a current density of 10 mA/cm$^2$ with respect to the area of the 5 mm-diameter circle of the negative electrode structure where the zinc foil was exposed was used. The battery was operated as follows. First, the battery was discharged to 5 mAh/cm$^2$ at the above-described current density, and the flowing current was stopped for 10 minutes. After that, the battery was charged to 3 mAh/cm$^2$ at the same current density as that used when the battery was discharged, and the flowing current was stopped for 10 minutes. Then, the battery was discharged to 3 mAh/cm$^2$ at the same current density. The battery was rested for 10 minutes, charged to 3 mAh/cm$^2$, rested for 10 minutes, and discharged to 3 mAh/cm$^2$. This was counted as one cycle. After that, this cycle was repeated. However, when the potential of the negative electrode structure with respect to the zinc wire during charge reached a value smaller than -2V before the battery was charged to 3 mAh/cm$^2$ or when the potential of the negative electrode structure during discharge reached a value greater than 0.2 V, the battery was immediately rested at that timing. In this test, the battery was charged and discharged at 10 mA/cm$^2$ relative to a charge discharge capacity of 3 mAh/cm$^2$. Accordingly, the C rate that is used to indicate a battery's charge discharge speed is 3 C or more, which is a very high charge discharge rate as the charge discharge rate when the battery is in use.

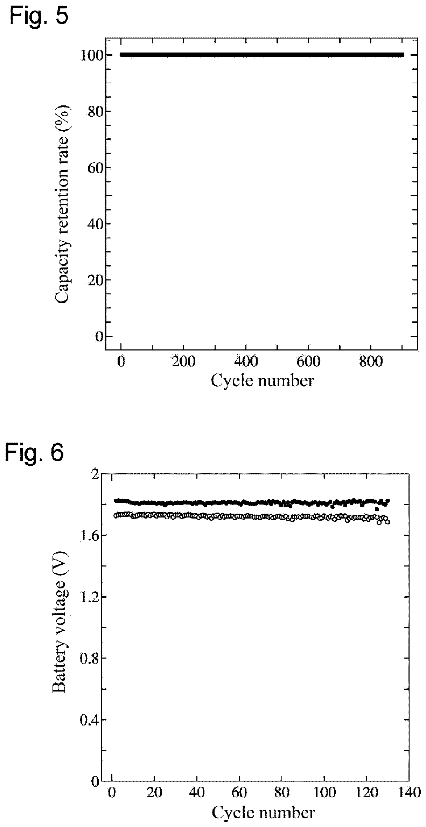

Fig. 4 shows results of measurement of average discharge voltage (V) and average charge voltage (V) with respect to cycle number. In Fig. 4, a black dot "•" indicates average charge voltage (V), and a white dot "o" indicates average discharge voltage (V). Fig. 5 shows results of measurement of capacity retention rate (%) with respect to cycle number. The capacity retention rate (%) indicates the ratio of capacity discharged relative to a reference charge discharge capacity of 3 mAh/cm$^2$ for the cycle. When the battery is discharged to 3 mAh/cm$^2$, the capacity retention rate is 100%.

In the secondary battery produced in this example, at a charge/discharge cycle exceeding 900 cycles, the change in the average charge voltage from the initial value was small, and the average discharge voltage decreased only by about 0.1 from the initial value. Also, the capacity retention rate was maintained at 100%. Furthermore, nothing fell off from the battery while the battery was in operation. It is to be noted that this battery was still capable of being charged and discharged after 900 cycles.

Example 2

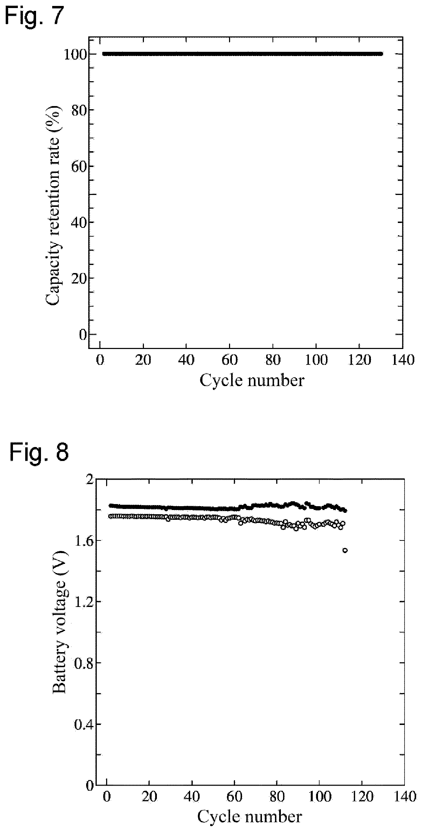

A negative electrode structure and a secondary battery were produced in the same manner as in Example 1, and subjected to evaluation under the same conditions as those used in Example 1, except that a pure zinc foil was used instead of the bismuth-containing zinc foil used in Example 1. Fig. 6 shows results of measurement of average discharge voltage (V) and average charge voltage (V) with respect to cycle number. In Fig. 6, a black dot "e" indicates average charge voltage (V), and a white dot "o" indicates average discharge voltage (V). Fig. 7 shows results of measurement of capacity retention rate (%) with respect to cycle number. The pure zinc foil was produced in the following manner.

An electrolyte solution was prepared in the same manner as in Example 1, except that the concentration of zinc in the electrolyte solution was changed to 75 g/L, and the concentration of sulfuric acid, which is a value obtained by converting the total amount of sulfate ions to $H_2SO_4$, was changed to 200 g/L. A zinc foil was obtained by performing electrolysis under the same conditions as those used in Example 1, except that the current density was changed to 2000 $A/m^2$. The obtained body had a surface roughness of 1.3 $\mu$m and a thickness of 63 $\mu$m.

In the secondary battery produced in this example, the changes in the average charge voltage and the average discharge voltage from the initial values were very small. Also, the capacity retention rate was maintained at 100%. Furthermore, it was found, from a comparison between the battery of Example 2 and a battery of Comparative Example 1, which will be described later, that the charge/discharge cycle characteristics of the battery of Example 2 were superior to the battery of Comparative Example 1 in terms of both the average charge and discharge voltages and the capacity retention rate.

Comparative Example 1

A liquid fullon mask (Fullon Mask MA-1 available from Fruto Industrial, Co., Ltd.) was applied to a portion other than the 5 mm-diameter circle at the center of the portion A of the body formed of the bismuth-containing zinc foil used in Example 1, and dried at room temperature for 3 days. In this way, a coating film was formed. After the coating film was formed, the zinc foil-exposed portion was cleaned with acetone.

According to the safety data sheet, the fullon mask is composed of 20 to 26% of polyvinyl chloride resin, 18 to 24% of toluene, 44 to 50% of methyl ethyl ketone, and 5.5 to 8.5% of methyl isobutyl ketone, and the coating film is formed as a result of the polyvinyl chloride resin being solidified. Also, the coating film had no electron conductivity and no stretchability. Accordingly, it was not possible to measure the stretch parameter Z.

A negative electrode structure and a secondary battery were produced in the same manner as in Example 1, and subjected to evaluation under the same conditions as those used in Example 1, except for the above-described changes.

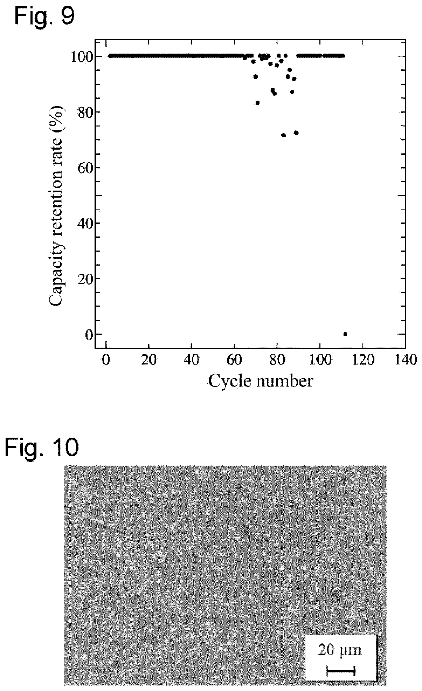

Fig. 8 shows results of measurement of average discharge voltage (V) and average charge voltage (V) with respect to cycle number. In Fig. 8, a black dot "•" indicates average charge voltage (V), and a white dot "o" indicates average discharge voltage (V). Fig. 9 shows results of measurement of capacity retention rate (%) with respect to cycle number.

With the secondary battery of Comparative Example 1, according to the data that was obtainable only up to 112 cycles, the secondary battery exhibited almost constant average charge voltage and average discharge voltage to about 60 cycles. However, after that, the average voltage varied up and down as the charge discharge cycle number increases. Also, the discharge voltage decreased and the charge voltage increased as compared to those to 60 cycles, which shows a tendency of deterioration of the characteristics. Also, the capacity retention rate was 100% to about 60 cycles, but after that, the capacity retention rate decreased to about 70% in a plurality of cycles. Finally, the battery was no longer able to be discharged after 112 cycles, and thus the test was stopped. From the changes in the average voltage and the capacity retention rate, it is considered that, in Comparative Example 1, due to the occurrence of an internal short circuit, the battery was unable to be discharged occurred.

Example 3

In this example, a resin spacer (10 mm × 10 mm × 3 mm (thickness)) was provided between the negative electrode structure and the nickel positive electrode in Example 1. The resin spacer had a through hole with a diameter of 5 mm formed at the center thereof. The resin spacer was provided such that the through hole coincided with the opening portion of the film of the negative electrode structure. Furthermore, the resin spacer had a transparent hole extending from an upper side of the spacer to the through hole and a transparent hole extending from a lower side of the spacer to the through hole. These transparent holes were formed for the purpose of supplying the electrolyte solution and also for the purpose of observing fallen-off substances. A negative electrode structure and a secondary battery were produced in the same manner as in Example 1, and subjected to evaluation under the same conditions as those used in Example 1, except for the above-described changes.

In the secondary battery including the zinc negative electrode produced in this example, at a charge/discharge cycle exceeding 1950 cycles, the changes in both the average charge voltage and the average discharge voltage from the initial values were very small, and signs of an internal short circuit such as an abrupt decrease in discharge voltage and an abrupt increase in charge voltage were not observed. Also, the capacity retention rate was maintained at 100%. Furthermore, nothing fell off from the battery while the battery was in operation. It is to be noted that this battery was still capable of being charged and discharged after 1950 cycles.

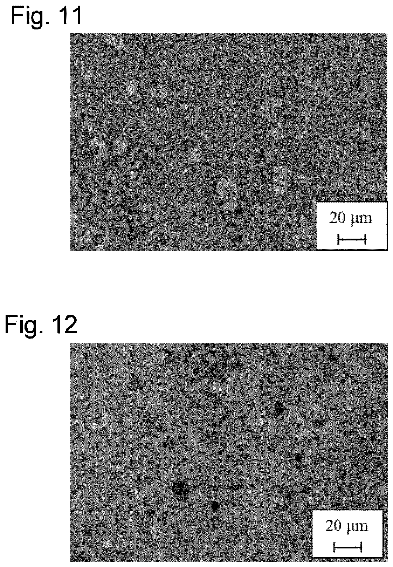

The secondary battery obtained in this example was subjected to 514 charge discharge cycles, and then, 901 charge discharge cycles. After that, the battery was disassembled to remove the negative electrode structure. The negative electrode structure was sufficiently cleaned using distilled water, and dried. Then, the zinc foil exposed at the opening portion of the film was observed using a scanning electron microscope. Fig. 10 shows results of observation of the zinc foil before the battery was subjected to charge discharge cycles. Also, Figs. 11 and 12 show results of observation of the zinc foil after the battery was subjected to 514 charge discharge cycles and after the battery was subjected to 901 charge discharge cycles.

When Fig. 10 and Fig. 11 are compared, large particles are observed in portions in Fig. 11. However, as a whole, no detached portions and no fallen-off portions were observed. The reaction proceeded uniformly even after 500 charge discharge cycles, and a dendritic growth of zinc and a non-uniform reaction distribution, which are seen in a conventional zinc secondary battery, were not observed.

Also, when Fig. 10 and Fig. 12 are compared, black spots are observed in portions in Fig. 12. However, as a whole, no detached portions and no fallen-off portions were observed. The reaction proceeded uniformly even after 900 charge discharge cycles, and a dendritic growth of zinc and a non-uniform reaction distribution, which are seen in a conventional zinc secondary battery, were not observed. Also, the black spots are not zinc-fallen off portions, but are portions where there was more zinc oxide on the surfaces thereof. Because zinc oxide has low conductivity, they turned black.

Comparative Example 2

The bismuth-containing zinc foil used in Example 1 was cut into a 1 cm (width) $\times$ 9 cm (length) rectangle. Only a 1 cm (width) $\times$ 1 cm (length) square portion extending from one end of one of the main surfaces of the zinc foil was used as an electrolyte solution-contact portion, and a fullon mask was applied to the remaining portion. In Comparative Example 2, in the zinc foil, one surface of the 1 cm (width) $\times$ 1 cm (length) rectangle serves as the electrode reaction portion. The non-electron conductive film used in Examples 1 and 2 was not attached to this surface, and the fullon mask used in Comparative Example 1 was not applied to this surface.

A negative electrode structure and a secondary battery were produced in the same manner as in Example 1, except for the above-described changes. Then, the negative electrode structure and the secondary battery were subjected to evaluation under the same conditions as those used in Example 1, except that the current density with respect to the exposed area (1 cm$^2$) of the zinc foil opposing the nickel positive electrode was set to 10 mA/cm$^2$.

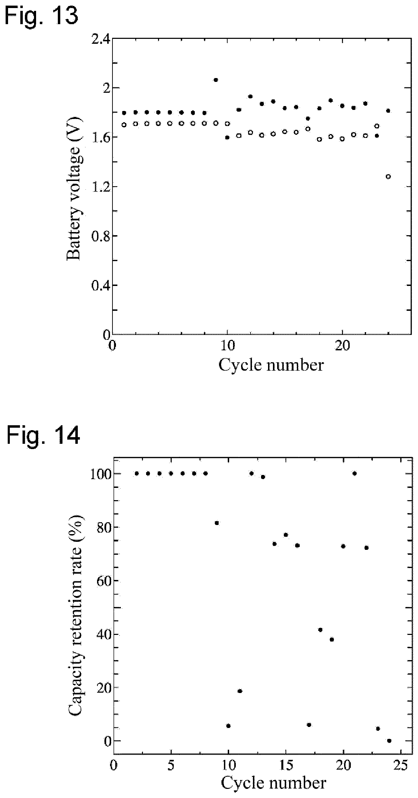

Fig. 13 shows results of measurement of average discharge voltage (V) and average charge voltage (V) with respect to cycle number. In Fig. 13, a black dot "e" indicates average charge voltage (V), and a white dot "o" indicates average discharge voltage (V). Fig. 14 shows results of measurement of capacity retention rate (%) with respect to cycle number.

With the second battery of Comparative Example 2, to 8 cycles, the secondary battery exhibited the same average charge voltage and average discharge voltage as those of the examples. However, at the 9th cycle, the average charge voltage increased to 2 V or more. In contrast, at the 10th cycle, the average charge voltage decreased to 1.6 V, which is smaller than the electromotive force of the zinc nickel secondary battery. Accordingly, it was found that there is a possibility that an internal short circuit occurred. After 11 cycles, the average charge voltage varied up and down. At the 23rd cycle, the average charge voltage decreased again to a value lower than the electromotive force. The average discharge voltage after 11 cycles was around 1.6 V However, at the 24th cycle, the average discharge voltage decreased to 1.3 V, showing an indication of the occurrence of an internal short circuit.

Also, the capacity retention rate was 100% to 8 cycles, but after that, the capacity retention rate varied significantly. Specifically, the capacity retention rate decreased to a value lower than or equal to 20% at the 10th, 11th, 17th, and 23rd cycles, and decreased to 0% at the 24th cycle, at which the battery was no longer able to be operated. Thus, the test was stopped.

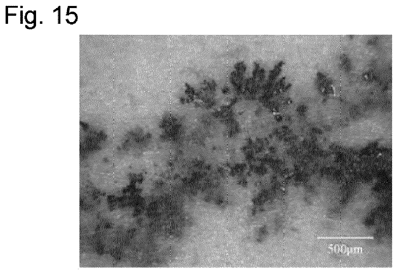

The secondary battery obtained in Comparative Example 2 was disassembled after the test was stopped. The nonwoven fabric separator provided between the negative electrode structure and the nickel positive electrode was removed from the secondary battery, and observed using a digital microscope. Fig. 15 shows observation results. In Fig. 15, a dendritic growth of zinc (black portions in the image) was observed, from which it was found that zinc dendrites penetrated through the nonwoven fabric separator.

Comparative Example 3

A polyethylene terephthalate (PET) film was used instead of the PTFE film used in Example 1. The PET film had a stretch parameter Z of 0.15. An attempt was made to produce a secondary battery in the same manner as in Example 1. However, it was not possible to attach the PET film and the body in a liquid-tight manner, and it is therefore not possible to produce the battery.

**Industrial Applicability**

A secondary battery that includes the negative electrode structure of the present invention has improved charge discharge cycle characteristics.

**Claims**

1.  A negative electrode structure for a secondary battery, comprising:

    a body that is in a form of a foil or a thin plate and contains zinc as a base material; and
    a non-electron conductive film provided on at least a first surface of the body, wherein the film is stretchable, the film includes:

    an opening portion formed to expose a portion of the first surface of the body; and
    an electrode reaction inhibiting portion that defines a perimeter of the
    opening portion and inhibits an electrode reaction in the body, and

    the film is attached to the body in a liquid-tight manner.

2.  The negative electrode structure for a secondary battery according to claim 1,
    wherein the body further contains bismuth.

3.  The negative electrode structure for a secondary battery according to claim 2,
    wherein the body contains 100 ppm or more and 10000 ppm or less of bismuth based on mass.

4.  The negative electrode structure for a secondary battery according to any one of claims 1 to 3,
    wherein the film has a thickness of 0.02 mm or more and 0.45 mm or less.

5.  The negative electrode structure for a secondary battery according to claim 1,
    wherein the negative electrode structure also functions as a current collector.

6.  A secondary battery comprising the negative electrode structure for a secondary battery according to claim 1.

7.  The secondary battery according to claim 6,

    wherein a positive electrode is provided to oppose the film in the negative electrode structure,
    a separator is provided between the positive electrode and the negative electrode structure, and
    an electrolyte solution is present between the positive electrode and the negative electrode structure.

## Fig. 1

## Fig. 2

## Fig. 3

Inter-electrode area

Electrodeposited electrode length

Anode

Inter-electrode distance

Cathode

## Fig. 4

Fig. 5

Fig. 6

EP 4 418 355 A1

Fig. 7

Fig. 8

Fig. 9

Fig. 10

Fig. 11

20 μm

Fig. 12

20 μm

Fig. 13

Fig. 14

Fig. 15

## INTERNATIONAL SEARCH REPORT

| International application No. |
|---|
| **PCT/JP2022/037651** |

| | |
|---|---|
| **A.** | **CLASSIFICATION OF SUBJECT MATTER** |

*H01M 4/24*(2006.01)i; *H01M 4/42*(2006.01)i; *H01M 4/66*(2006.01)i; *H01M 10/28*(2006.01)i; *H01M 50/474*(2021.01)i;
*H01M 50/477*(2021.01)i; *H01M 50/48*(2021.01)i
FI: H01M4/24 H; H01M50/474; H01M50/477; H01M50/48; H01M4/42; H01M4/66 A; H01M10/28 Z

According to International Patent Classification (IPC) or to both national classification and IPC

| | |
|---|---|
| **B.** | **FIELDS SEARCHED** |

Minimum documentation searched (classification system followed by classification symbols)

H01M4/00-62; H01M4/64-84; H01M10/00-04, 06-34; H01M12/00-08; H01M50/40-497

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021/161900 A1 (THE DOSHISHA) 19 August 2021 (2021-08-19)<br>  paragraphs [0050], [0054], [0060], [0066]-[0067], [0083], [0124]-[0125], fig. 3-10 | 1-7 |
| A | JP 2014-192137 A (MITSUBISHI HEAVY IND LTD) 06 October 2014 (2014-10-06)<br>  paragraphs [0018]-[0019], fig. 1-2 | 1-7 |
| A | WO 2021/192563 A1 (MITSUI MINING & SMELTING CO., LTD.) 30 September 2021<br>(2021-09-30)<br>  claims, paragraph [0021] | 1-7 |
| A | JP 2010-518585 A (POWERGENIX SYSTMES, INC.) 27 May 2010 (2010-05-27)<br>  claims 1, 5 | 1-7 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/037651**

| Patent document cited in search report | | | Publication date (day/month/year) | Patent family member(s) | | | Publication date (day/month/year) |
|---|---|---|---|---|---|---|---|
| WO | 2021/161900 | A1 | 19 August 2021 | (Family: none) | | | |
| JP | 2014-192137 | A | 06 October 2014 | (Family: none) | | | |
| WO | 2021/192563 | A1 | 30 September 2021 | CN | 115244736 | A | |
| JP | 2010-518585 | A | 27 May 2010 | US | 2010/0092857 | A1 | |
| | | | | claims 1, 5 | | | |
| | | | | WO | 2008/100831 | A1 | |
| | | | | EP | 2130247 | A1 | |
| | | | | CN | 101026234 | A | |
| | | | | KR | 10-2009-0109550 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013154623 A1
- JP 2018147739 A
- JP 2018147738 A
- JP 2018133324 A
- JP 2018026205 A
- US 20190123319 A1
- JP 2017091949 A
- JP 2016201199 A
- JP 2016194990 A
- JP 2016189356 A
- JP 2016170944 A

- JP 2016146263 A
- JP 2014222570 A
- JP 2012104273 A
- JP 2019021518 A
- WO 2014069541 A
- JP 2014026951 A
- US 20180130998 A1
- US 20190214636 A1
- US 20150364790 A1
- WO 2021049609 A

**Non-patent literature cited in the description**

- **J. F. PARKER ; C. N. CHERVIN ; I. R. PALA ; M. MACHLER ; M. F. BURZ ; J. W. LONG ; D. R. ROLISON.** *Science,* 2017, vol. 356, 415-418
- **K. MIYAZAKI ; Y S. LEE ; T. FUKUTSUKA ; T. ABE.** *Electrochemistry,* 2012, vol. 80 (10), 725-727

- **R. KODA ; K. FUKAMI ; T. SAKKA ; Y H. OGATA.** *ECS Electrochemistry Letter,* 2013, vol. 2, D9-D11